# EUROPEAN PATENT SPECIFICATION

(11) **EP 1 061 667 B1**
(45) Date of publication and mention of the grant of the patent: **20.08.2003**
(21) Application number: 99304583.0
(22) Date of filing: 11.06.1999
(51) Int. Cl.: H04B 7/005, H04L 25/03

(54) **Improved channel estimation technique**
Verbesserte Kanalschätzungsmethode
Technique d'estimation de canal améliorée

(43) Date of publication of application: 20.12.2000
(73) Proprietor: LUCENT TECHNOLOGIES INC., Murray Hill, New Jersey 07974-0636 (US)
(72) Inventor: Ilas, Constantin, Swindon SN5 9RP (GB); Karimi, Hamid R., Swindon SN5 5BJ (GB); Luschi, Carlo, Oxford OX2 OQT (GB); Sandell, Magnus, Swindon SN1 3PN (GB); Wu, Jian Jun, Lower Earley, Reading RG6 3AB (GB)
(74) Representative: Williams, David John

(56) References cited:
- EP-A- 0 701 334
- EP-A- 0 788 260
- DE-A- 19 703 060

## Description

### Field of the Invention

The present invention relates to an improved technique for estimating the timing position of a received signal in the channel estimation stage of a receiver, such as a GSM receiver, prior to the channel estimation process.

### Background to the Invention

In a conventional GSM receiver, a mid-amble segment of a time-slot is used in a channel estimation stage to derive an initial estimate of the radio channel. This is subsequently used in conjunction with an equaliser to derive estimates of all the bits transmitted in the time-slot. The performance is limited by the fact that only a few equations are available for this operation, due to the finite length and the properties of the mid-amble segment.

In a more advanced GSM receiver, the initial estimates of all the bits in the time-slot can be used as a long mid-amble in order to derive a better channel estimate and subsequently better estimates of the bits in the time-slot. The derivation of the second channel estimate effectively uses the whole time-slot as a long mid-amble and requires the solution of a linear system of equations. This procedure can be repeated indefinitely, with diminishing returns, to improve the performance of the receiver. With this technique, the channel estimation stage usually requires the implementation of a computationally intensive technique such as a least squares value calculation in order to determine the channel estimate, which places a burden on processing time and cost.

It is therefore an object of the present invention to provide an improved technique for channel estimation.

It is known from European patent publication EP-A-0788260 to provide a receiver in a wireless communication system including circuitry for estimating the timing position of a received signal including: a first correlator for correlating the received signal with an expected sequence and for generating at an output thereof the m successive correlation results having the highest values; a level detector for determining and generating at an output thereof the n successive correlations of the m correlations having the highest values, where n<m; an offset calculator for determining the timing offset between the first position of the n correlations and the first position of the m correlations; adjustment means for adjusting the timing position of the received signal by the determined timing offset.

The present invention provides a receiver in a wireless communication system including a channel estimation stage including first and second channel estimator blocks and first and second equaliser blocks, each block receiving the received signal as a respective first input, the first channel estimator receiving a signal carrying a training sequence as a second input, the output of the first channel estimator forms a second input to the first equaliser, the output of the first equaliser forms a second input to the second channel estimator, the output of the second channel estimator forms a second input to the second equaliser in which the first estimator block includes circuitry for estimating the timing position of a received signal including: a first correlator for correlating the received signal with an expected sequence and for generating at an output thereof the m successive correlation results having the highest average power, an average power detector for determining and generating at an output thereof the n successive correlations of the m correlations having the highest average power, where n<m; an offset determinator for determining the timing offset between the first position of the n correlations and the first position of the m correlations; adjustment means for adjusting the timing position of the received signal by the determined timing offset, and a final channel estimation stage for generating a channel estimation, wherein the channel is estimated directly in n-steps based on the time-adjusted received signal.

The final channel estimation stage may include a least squares value calculator.

### Brief Description of the Drawings

Figure 1 illustrates a block diagram of a general channel estimation and equalisation stage;
Figure 2 illustrates one known example implementation of the channel estimator block of Figure 1;
Figure 3 illustrates a further known example implementation of the channel estimator block of Figure 1;
Figure 4 illustrates the principle of operation of a part of the channel estimator block of Figures 2 and 3;
Figure 5 illustrates an implementation of a channel estimation and equalisation stage utilising the channel estimation blocks of both Figures 2 and 3;
Figure 6 illustrates an example implementation of a channel estimator block according to the present invention;
Figure 7 illustrates one example implementation of the final channel estimator stage of the block of Figure 6; and
Figure 8 illustrates one example implementation of the final channel estimator stage of the block of Figure 6.

### Description of Preferred Embodiment

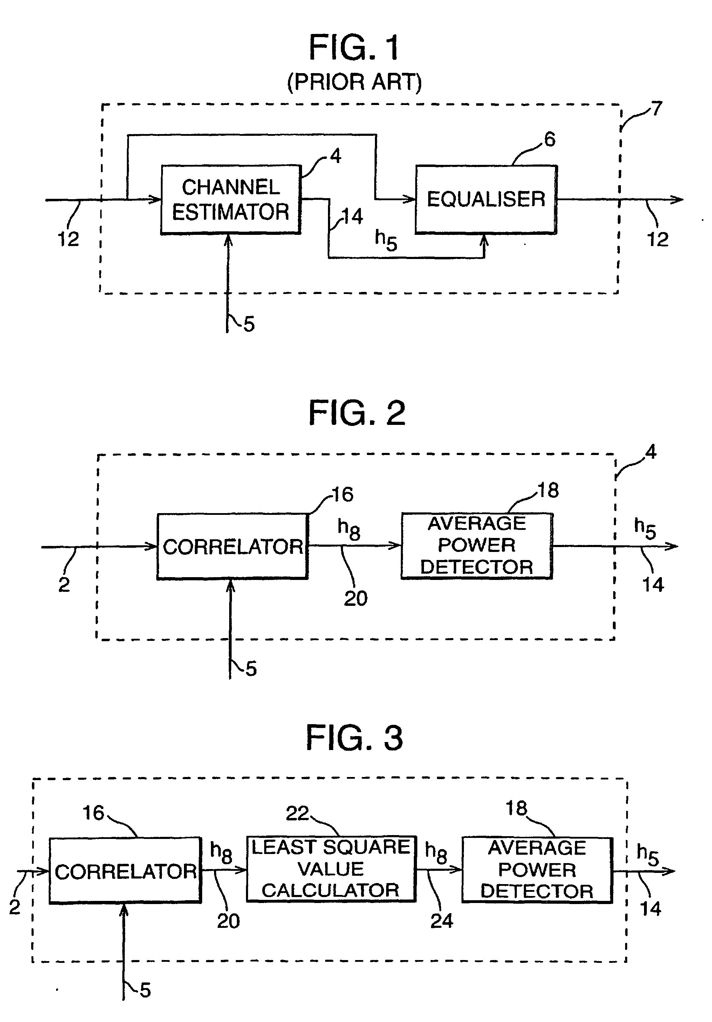

Figure 1 illustrates a block diagram of a known implementation of a general channel estimation and equalisation stage 7 such as may be suitable for a receiver in a GSM system. The channel estimation and equalisation stage 7 receives as an input a received signal on a line 2, and outputs an estimate of the symbols conveyed by the received signal on line 12.

The channel estimation and equalisation stage 7 of Figure 1 includes an estimator block 4 and an equaliser block 6. The channel estimator block 4 and the equaliser block 6 each receive as a first input the received signal on line 2. The channel estimator block 4 additionally receives as a second input a signal carrying a training sequence for the received signal on line 5. The output of the channel estimator 4 on line 14 forms a second input to the equaliser 6. The output of the equaliser 6 on line 12 forms the channel estimate, and is provided for processing elsewhere in the receiver circuitry.

The channel estimator block 4 includes a correlator for correlating the received signal. As will be understood by one skilled in the art, the correlator performs a correlation function on the received signal. The general operation of a channel estimator and equalisation stage 7 such as that shown in Figure 1 will be well known to those skilled in the art. A description of the operation of the channel estimator is given hereinbelow so as to understand an implementation of the present invention.

The received signal on line 2 will contain, if it is a GSM signal, a training sequence. The training sequence is a fixed number of bits, located in the middle of a GSM burst (and therefore known as a "mid-amble training sequence"), which can be used to estimate the timing position of the received signal. The training sequence provided on line 5 corresponds to the known training sequence bits for the current burst. This training sequence is correlated, in the channel estimator 4, with the received signal samples at the estimated location of the mid-amble training sequence for a number of estimated positions of the mid-amble training sequence. The channel estimator thus performs a number of correlations to generate a correlation function, and the bit positions of those correlation values of the function having the highest values are provided on line 14 to the equaliser 6. In GSM, the channel estimator provides to the equaliser 6 the five best correlation values, and hence a five taps channel estimate h₅ is provided on line 14 at the output of the channel estimator. A channel estimate in five taps is provided in the example of Figure 1 because it is an example of a GSM system, in which the received signal is sampled at the bit rate and the channel length is usually lower than five bit intervals. In general, the channel length can be considered to be n bit intervals, and thus in general n tap estimates are provided at the output of the channel estimator 4

The equaliser 6, in accordance with known techniques, then equalises the received signal on line 2 based on the five symbol estimates provided on line 14 and generates an equalised received signal on line 12.

With reference to Figures 2 and 3, two examples of known ways of implementing the channel estimator block 4 for generating the five channel estimates will be described.

In a first example, referring to Figure 2, the channel estimator block includes a correlator 16 and an average power detector 18. The correlator 16 receives as a first input the received signal on line 2 and as a second input the training sequence on line 5, and generates an output on line 20 to the average power detector. The average power detector generates an output on the signal line 14.

In this example it is assumed that the training sequence on line 5 is the GSM training sequence. The correlator 16 correlates the training sequence on line 5 with the received signal on line 2 and generates on line 20 a channel estimate usually in eight taps, designated by h₈.

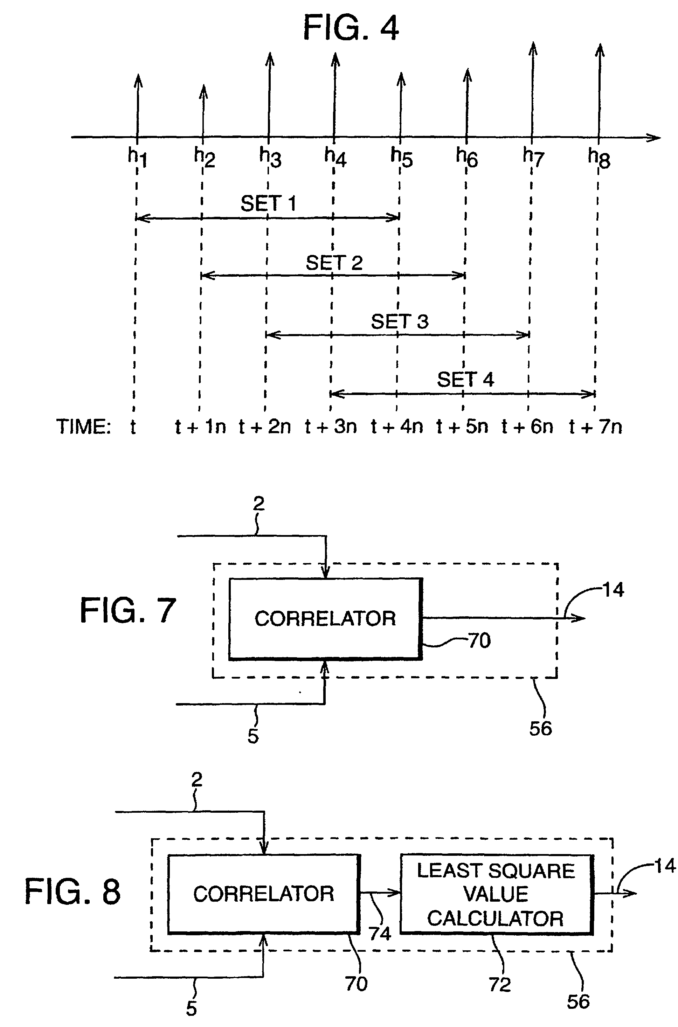

The set of eight values are illustrated with respect to Figure 4. The eight symbol estimates h₁ to h₈ are located at timing positions t to t+7n. The axis shown in Figure 4 represents time, and the height of the arrow of each of the symbol estimates represents the power of that particular symbol estimate.

The eight channel estimates are input to the average power detector 18, which measures the average power of each set of five consecutive values of the eight values h₈. Thus, referring to Figure 4, the average power detector 26 measures the average power of each of the sets 1 to 4. The average power detector then outputs the one of the set of five having the highest average power on line 14 as the five taps channel estimate h₅.

Thus it can be seen that the channel estimator 4 first generates an eight taps estimate, and then from this set of eight determines the five taps for use by the equaliser 5. In general, the channel estimator can be considered to first generate an m tap estimate, and then from this set of eight taps select an n tap estimate for use by the equaliser (where m>n).

It is well-known for the channel estimators to select the required n channel estimates from a larger intermediate set m. This technique allows the correct set of n estimates to be more accurately determined. This practice allows for a better synchronisation of the received signal, based on the offset of the n tap estimate relative to the full estimate in m taps. Whilst n is usually dictated by the trade-off of performance versus complexity (cost) in the equaliser block, m is dependant upon the implementation.

In a second example, referring to Figure 3, the channel estimator 4 includes the correlator 16, a least squares value calculator 22, and the average power detector 18. The correlator 16 generates, as in Figure 3, the eight channel estimates h₈ on line 20, which in this example form an input to the least squares value calculator 22.

The least squares value calculator operates on the eight values at the output of the correlator 16 to generate a further eight channel estimates h₈. The eight taps estimate on line 24 corresponds directly to the eight symbol estimates on line 20. The least squares operation performed by the least square value calculator 22 reduces the noise in the channel estimate on line 20.

The eight taps estimate on line 24 is processed by the average power detector 18 in the same manner as described hereinabove with reference to Figure 2, to generate the five channel estimates h₅ on line 14. Again, this example implementation can be extended to the general case where an n tap estimate is derived from an intermediate set of m.

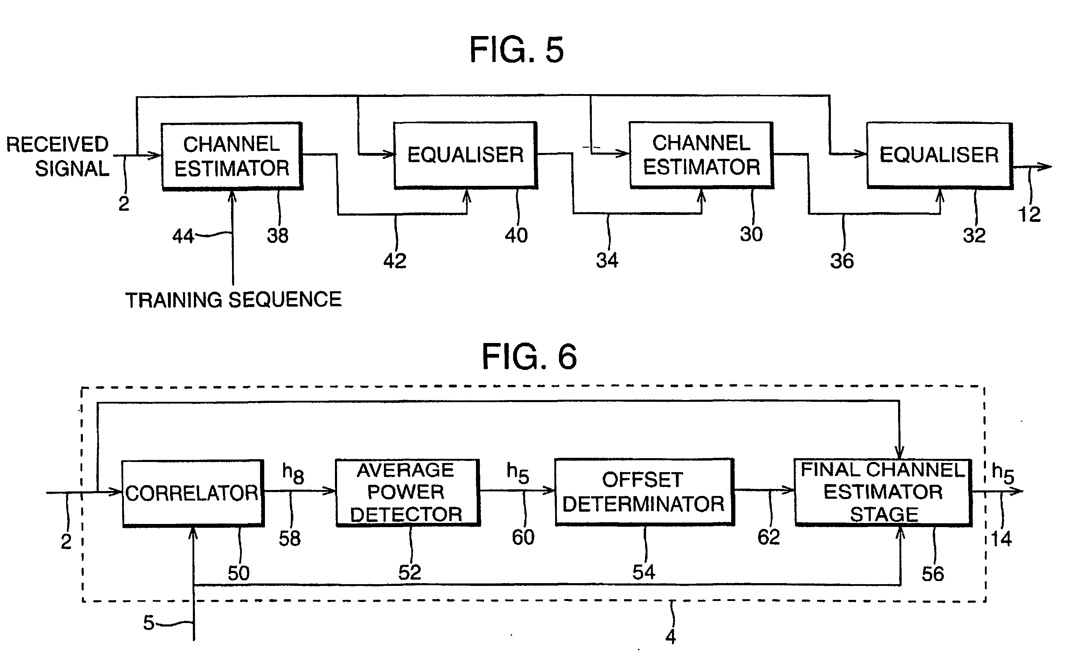

For completeness, an example implementation utilising both the examples of Figures 2 and 3 is shown in Figure 5, and briefly described hereinbelow.

Figure 5 shows a channel estimation stage suitable for a GSM receiver including two channel estimator blocks 38 and 30 and two equaliser blocks 40 and 32. All of the blocks of the channel estimation stage receive as a first input the received signal on line 2. The channel estimator 38 additionally receives as a second input the signal carrying a training sequence for the received signal on line 44. The output of the channel estimator 38 on line 42 forms a second input to the equaliser 40. The output of the equaliser 40 on line 34 forms a second input to the channel estimator 30. The output of the channel estimator 30 on line 36 forms a second input to the equaliser 32. The output of the equaliser 32 on line 12 forms the channel estimate.

Each of the equalisers 40 and 32 correspond to the equaliser 6 of Figure 1. The channel estimator 38 corresponds to the channel estimator of Figure 2, and the channel estimator 30 corresponds to the channel estimator of Figure 3.

The training sequence provided on line 44 corresponds to the known training sequence for the current burst. Because of the strong correlation properties associated with the relatively short training sequence, the channel estimator of Figure 2 generally provides acceptable results. The output of the channel estimator 38 on line 42 corresponds to the output on line 14 in Figure 2. The equalised signal on line 34, which corresponds to the output on line 12 for Figure 1, forms the training sequence input for the channel estimator 30. Thus the output of the equaliser 40 on line 34 is treated as a long training sequence, and correlated with the received signal on line 2. Because the correlation properties of the long training sequence will not be as strong, the channel estimator of Figure 2 provides good results because of its ability to distinguish noise.

The disadvantage of the channel estimator block of Figure 2 is that it is strongly affected by noise, especially in the quality of the estimated values at the output of the correlator. However, the operation of performed by the average power detector is less affected by noise, since it only deals with the relative power levels of the estimated taps.

The disadvantage of the channel estimator block of Figure 3 is that the least square value calculation stage requires a large number of mathematical operations, because it has to be carried out for a channel estimate in eight taps.

Referring to Figure 6, there is illustrated an embodiment of an improved channel estimator stage according to the present invention which overcomes the problems associated with the known implementations discussed hereinabove with reference to Figures 1 and 2.

The channel estimator of Figure 6, again generally designated by reference numeral 4, comprises a correlator 50, an average power detector 52, an offset determinator 54, and a final channel estimator stage 56. The correlator 50 and average power detector 52 may correspond identically to the equivalent functional elements shown in Figures 2 and 3.

The correlator 50 correlates the received signal on line 2 with a training sequence on line 5, and as before generates the eight tap channel estimate h₈ at its output on line 58. The eight tap channel estimate h₈ on line 58 forms an input to the average power detector 52, which generates on line 60 the five tap channel estimate h₅ having the highest average power of the eight. The five tap channel estimate h₅ on line 60 forms an input to the offset determinator 54 which generates an output on line 62 which forms an input to the least square value calculator 56. The final channel estimator 56 receives as second and third inputs the received signal on line 2 and the training sequence on line 5, and generates the input to the equaliser 6 on line 14.

Referring again back to Figure 4, the average power detector generates on line 60 the set of five values h₅ corresponding to the highest average power, being one of the sets 1 to 4. From this information, the offset determinator determines the offset, from value h₁, to the first value of the set having the highest average power. Thus if the selected values h₅ correspond to set 1, the offset is zero, if they correspond to set 1 the offset is n, if they correspond to set 2 the offset is 2n, and if they correspond to set 3 the offset is 3n.

This offset information is then provided on line 62 to the final channel estimator stage 56. Using this offset information the final channel estimator 56 is able to align the received signal on line 2 at its second input before performing the final estimation. That is, the received signal on line 2 at the input to the final channel estimator stage 56 is time-shifted by an amount corresponding to the offset of the set h₅ from the set h₈. Thus the final channel estimator stage directly can determine the synchronised channel estimate in five taps. Without this information, the final channel estimator stage 56 would have to first determine a channel estimate in eight taps and then select the five with the highest power as well as their offset.

The structure of the final channel estimator stage 56 will be implementation dependent. For example, referring to Figure 7, the final channel estimator stage 56 may comprise a correlator 70. The correlator correlates the received signal on line 2, time-shifted by the offset determined by the offset determinator 54, with the expected training sequence on line 5. The result of this correlation then forms the output on line 14.

In another example, referring to Figure 8, the final estimator stage 56 may comprise the correlator 70 and a least squares value calculator 72. The correlator correlates the received signal on line 2, time-shifted by the offset determined by the offset determinator 54, with the expected training sequence on line 5. The output of the correlator on line 74 forms an input to he least squares value calculator 72, which operates in an equivalent manner to the least squares value calculator of Figure 3 to generate the output signal on line 14.

The channel estimator block shown in Figure 6 may replace either of the channel estimator blocks 38 or 30 in Figure 5.

If used inside block 30, the channel estimator block of Figure 6 will preferably be implemented using the final channel estimator of Figure 8. The channel estimator block according to the present invention gives the same accuracy as the scheme in Figure 3 (and is better than that in Figure 2) but at a lower complexity.

If used inside block 38 the channel estimator block of Figure 6 will preferably be implemented again using the final channel estimator of Figure 8. The channel estimator block according to the present invention increases the accuracy of the estimation. The reason for this is that for the first channel estimator the performance is limited by the fact that only a few equations are available for this operation, due to the finite length and the properties of the training sequence. By reducing from m to n the number of unknown values that are to be determined from these equations, the accuracy is much improved.

An advantage of the technique of the present invention over the known implementation of Figure 3 is that the complexity of the least squares value calculation stage is reduced because the mathematical operation only has to be performed on five symbol estimates. Thus the least squares operation is reduced without having to sacrifice any accuracy in the estimation.

The channel estimator block of Figure 6 may be particularly advantageously used to implement the channel estimator block 30 of Figure 5.

The principle of the invention, as exemplified by the implementation of Figure 6, may be applied in any estimation stage where it is desired to improve the quality of the estimation. It is not restricted in its applications to estimators which employ a least squares function.

Referring to Figure 6, although the channel estimation is shown to be based on a least squares technique, the principle of the invention extends to other estimation techniques, and the block 56 of Figure 6 may be substituted for another estimation block.

Although in the above-described example the principles of the invention have been described with reference to a GSM application, the invention could be utilised in a CDMA or other wireless system to an equally advantageous effect.

## Claims

1. A receiver in a wireless communication system including a channel estimation stage (38,40,30,32) including first and second channel estimator blocks (38, 30) and first and second equaliser blocks (40,32), each block receiving the received signal as a respective first input, the first channel estimator (38) receiving a signal carrying a training sequence as a second input, the output of the first channel estimator forms a second input to the first equaliser (40), the output of the first equaliser (40) forms a second input to the second channel estimator (30), the output of the second channel estimator (30) forms a second input to the second equaliser (32) in which either the first estimator block (38) or the second estimator block (30) includes circuitry for estimating the timing position of a received signal including: a first correlator (50) for correlating the received signal with an expected sequence and for generating at an output thereof the m successive correlation results having the highest average power; an average power detector (52) for determining and generating at an output thereof the n successive correlations of the m correlations having the highest average power, where n<m; an offset determinator (54) for determining the timing offset between the first position of the n correlations and the first position of the m correlations; adjustment means for adjusting the timing position of the received signal by the determined timing offset, and a final channel estimation stage (56) for generating a channel estimation, wherein the channel is estimated directly in n steps based on the time-adjusted received signal.

2. The receiver of claim 1 in which the final channel estimation stage (56) includes a least squares value calculator (72).

3. A GSM system according to any preceding claim in which n=5.

## Patentansprüche

1. Empfänger in einem drahtlosen Kommunikationssystem mit einer Kanalschätzstufe (38, 40, 30, 32), die einen ersten und einen zweiten Kanalschätzerblock (38, 30) und einen ersten und einen zweiten Entzerrerblock (40, 32) aufweist, wobei jeder Block das Empfangssignal als ein jeweiliges erstes Eingangssignal empfängt, der erste Kanalschätzer (38) als ein zweites Eingangssignal ein eine Übungsfolge übertragendes Signal empfängt, das Ausgangssignal des ersten Kanalschätzers ein zweites Eingangssignal des ersten Entzerrers (40) bildet, das Ausgangssignal des ersten Entzerrers (40) ein zweites Eingangssignal des zweiten Kanalschätzers (30) bildet, das Ausgangssignal des zweiten Kanalschätzers (30) ein zweites Eingangssignal des zweiten Entzerrers (32) bildet, wobei entweder der erste Schätzerblock (38) oder der zweite Schätzerblock (30) eine Schaltung zum Schätzen der Zeittaktposition eines Empfangssignals aufweist, die folgendes enthält: einen ersten Korrelator (50) zum Korrelieren des Empfangssignals mit einer erwarteten Folge und zum Erzeugen der m aufeinanderfolgenden Korrelationsergebnisse mit der höchsten Durchschnittsleistung an einem Ausgang davon; einen Durchschnittsleistungsdetektor (52) zum Ermitteln und Erzeugen der n aufeinanderfolgenden Korrelationen der m Korrelationen mit der höchsten Durchschnittsleistung an einem Ausgang davon, wobei n<m ist; ein Offset-Ermittlungsglied (54) zum Ermitteln der Zeittaktverschiebung zwischen der ersten Position der n Korrelationen und der ersten Position der m Korrelationen; Einstellmittel zum Einstellen der Zeittaktposition des Empfangssignals durch die ermittelte Zeittaktverschiebung und eine letzte Kanalschätzstufe (56) zum Erzeugen einer Kanalschätzung, wobei der Kanal auf der Basis des zeitlich eingestellten Empfangssignals direkt in n Schritten geschätzt wird.

2. Empfänger nach Anspruch 1, bei dem die letzte Kanalschätzstufe (56) einen Rechner (72) für den Wert der kleinsten Quadrate enthält.

3. GSM-System nach einem der vorhergehenden Ansprüche, bei dem n=5 ist.

## Revendications

1. Récepteur dans un système de communication sans fil comportant un étage d'estimation de canal (38, 40, 30, 32) comportant des premier et deuxième blocs estimateurs de canal (38, 30) et des premier et deuxième blocs égalisateurs (40, 32), chaque bloc recevant le signal reçu comme première entrée respective, le premier estimateur de canal (38) recevant un signal portant une séquence d'apprentissage comme deuxième entrée, la sortie du premier estimateur de canal forme une deuxième entrée du premier égalisateur (40), la sortie du premier égalisateur (40) forme une deuxième entrée du deuxième estimateur de canal (30), la sortie du deuxième estimateur de canal (30) forme une deuxième entrée du deuxième égalisateur (32) dans lequel soit le premier bloc estimateur (38), soit le deuxième bloc estimateur (30) comporte des circuits pour estimer la position temporelle d'un signal reçu comportant : un premier corrélateur (50) pour corréler le signal reçu avec une séquence prévue et pour générer au niveau d'une sortie de celui-ci les m résultats de corrélation successifs ayant la plus haute puissance moyenne ; un détecteur de puissance moyenne (52) pour déterminer et générer au niveau d'une sortie de celui-ci les n corrélations successives des m corrélations ayant la plus haute puissance moyenne, où n<m ; un déterminateur de décalage (54) pour déterminer le décalage temporel entre la première position des n corrélations et la première position des m corrélations ; un moyen de réglage pour régler la position temporelle du signal reçu par le décalage temporel déterminé, et un étage d'estimation de canal final (56) pour générer une estimation de canal, dans lequel le canal est estimé directement en n étapes basées sur le signal reçu ajusté dans le temps.

2. Récepteur selon la revendication 1, dans lequel l'étage d'estimation de canal final (56) comporte un calculateur de valeurs de moindres carrés (72).

3. Système GSM selon l'une quelconque des revendications précédentes, dans lequel n=5.
